# EUROPEAN PATENT APPLICATION

(11) **EP 2 960 901 A1**
(43) Date of publication of application: **30.12.2015**
(21) Application number: 15173407.6
(22) Date of filing: 23.06.2015
(51) Int. Cl.: G10L 15/32, G10L 15/30, G10L 15/22, G10L 15/07, G10L 17/00, G10L 15/06

(54) **USER-ADAPTED SPEECH RECOGNITION**

(30) Priority: 23.06.2014 US 201462015879 P
(71) Applicant: Harman International Industries, Incorporated, Stamford, CT 06901 (US)
(72) Inventor: KREIFELDT, Richard Allen, South Jordan, UT Utah 84095 (US)
(74) Representative: Grünecker Patent- und Rechtsanwälte PartG mbB

(57) **Abstract**

One embodiment of the present disclosure sets forth an approach for performing speech recognition. A speech recognition system receives an electronic signal that represents human speech of a speaker. The speech recognition system converts the electronic signal into a plurality of phonemes. The speech recognition system, while converting the plurality of phonemes into a first group of words based on a first voice recognition model, encounters an error when attempting to convert one or more of the phonemes into words. The speech recognition system transmits a message associated with the error to a server machine. The speech recognition system causes the server machine to convert the one or more phonemes into a second group of words based on a second voice recognition model resident on the server machine. The speech recognition system receives the second group of words from the server machine.

## Description

### CROSS-REFERENCE TO RELATED APPLICATIONS

This application claims the benefit of United States provisional patent application, titled "USER ADAPTED SPEECH RECOGNITION," filed on June 23, 2014 and having Serial No. 62/015,879. The subject matter of this related application is hereby incorporated herein by reference.

### BACKGROUND

### Field of the Embodiments of the Present Disclosure

Embodiments of the present disclosure relate generally to speech recognition and, more specifically, to user-adapted speech recognition.

### Description of the Related Art

Various computing devices include mechanisms to support speech recognition, thereby improving the functionality and safe use of such devices. Examples of such computing devices include, without limitation, smartphones, vehicle navigation systems, laptop computers, and desktop computers. Computing devices that include mechanisms to support speech recognition typically receive an electronic signal representing the voice of a speaker via a wireless connection, such as a Bluetooth connection, or via a wired connection, such as an analog audio cable or a digital data cable. The computing device then converts the electronic signal into phonemes, where phonemes are perceptually distinct units of sound that distinguish one word from another. These phonemes are then analyzed and compared to the phonemes that make up the words of a particular language in order to determine the spoken words represented in the received electronic signal. Typically, the computing device includes a memory for storing mappings of phoneme groups against the words and phrases in the particular language. After determining the words and phrases spoken by the user, the computing device then performs a particular response, such as performing a command specified via the electronic signal or creating human readable text corresponding to the electronic signal that can be transmitted, via a text message, for example, or stored in a document for later use.

One drawback of the approach described above is that the mechanisms to support speech recognition for a particular language consume a significant amount of memory within the computing device. The computing device allocates a significant amount of memory in order to store the entire phoneme to word and phrase mappings and language processing support for a particular language. Because computing devices usually have only a limited amount of local memory, most computing devices are generally limited to supporting only one or two languages simultaneously, such as English and Spanish. If a speaker wishes to use mechanisms to support speech recognition for a third language, such as German, the mechanisms to support either English or Spanish speech recognition have to first be removed from the computing device to free up the memory necessary to store the mechanisms to support German speech recognition. Removing the mechanisms to support one language and installing the mechanisms to support another language is often a cumbersome and time consuming process, and typically requires some skill with electronic devices. As a result, such computing devices are difficult to use, particularly when a user desires mechanisms to support more languages than the computing device can simultaneously store.

In addition, such computing devices often have difficulty recognizing speech spoken by non-native speakers with strong accents or with certain speech impediments. In such circumstances, the computing device may fail to correctly recognize the words of the speaker. As a result, these computing devices can be difficult or impossible to use reliably by non-native speakers with strong accents or speakers who have speech impediments.

One solution to the above problems is to place the mechanisms to support speech recognition on one or more servers, where the computing device simply captures the electronic signal of the voice of the speaker and transmits the electronic signal over a wireless network to the remote server for phoneme matching and speech processing. Because the remote servers typically have higher storage and computational capability relative to the above-described computing devices, the servers are capable of simultaneously supporting speech recognition for a much larger number of languages. In addition, such remote servers can typically support reliable speech recognition under challenging conditions, such as when the speaker has a strong accent or speech impediment.

One drawback to conventional server implementations, though, is that the server is contacted for each speech recognition task. If the computing device is in motion, as is typical for vehicle navigation and control systems, the computing device may be able to contact the server in certain locations, but may be unable to contact the server in other locations. In addition, wireless network traffic may be sufficiently high such that the computing device cannot reliably establish and maintain communications with the server. As a result, once communications with the remote server is lost, the computing device may be unable to perform speech recognition tasks until the computing device reestablishes communications with the server. Another drawback is that processing speech via a remoter server over a network generally introduces higher latencies relative to processing speech locally on a computing device. As a result, additional delays can be introduced between receiving the electronic signal corresponding to the human speech and performing the desired action associated with the electronic signal.

As the foregoing illustrates, more effective techniques for performing speech recognition would be useful.

### SUMMARY

One or more embodiments set forth a method for performing speech recognition. The method includes receiving an electronic signal that represents human speech of a speaker. The method further includes converting the electronic signal into a plurality of phonemes. The method further includes, while converting the plurality of phonemes into a first group of words based on a first voice recognition model, encountering an error when attempting to convert one or more of the phonemes into words. The method further includes transmitting a message associated with the error to a server machine. The method further includes causing the server machine to convert the one or more phonemes into a second group of words based on a second voice recognition model resident on the server machine. The method further includes receiving the second group of words from the server machine.

Other embodiments include, without limitation, a computer readable medium including instructions for performing one or more aspects of the disclosed techniques, as well as a computing device for performing one or more aspects of the disclosed techniques.

At least one advantage of the disclosed approach is that speech recognition can be performed for multilingual speakers or speakers with strong accents or speech impediments with lower latency and higher reliability relative to prior approaches.

### BRIEF DESCRIPTION OF THE DRAWINGS

So that the manner in which the above recited features of embodiments of the invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 illustrates a speech recognition system configured to implement one or more aspects of the various embodiments;
Figure 2 sets forth a flow diagram of method steps for performing user-adapted speech recognition, according to various embodiments; and
Figure 3 sets forth a flow diagram of method steps for analyzing speech data to select a new voice recognition model, according to various embodiments.

### DETAILED DESCRIPTION

In the following description, numerous specific details are set forth to provide a more thorough understanding of certain specific embodiments. However, it will be apparent to one of skill in the art that other embodiments may be practiced without one or more of these specific details or with additional specific details.

Embodiments disclosed herein provide a speech recognition system, also referred to herein as a voice recognition (VR) system, that is tuned to specific users. The speech recognition system includes an onboard, or local, client machine executing a VR application that employs locally stored VR models and one or more network-connected server machines executing a VR application that employs additional VR models stored on the server machines. The VR application executing on the client machine operates with a lower latency relative to the network-connected server machines, but is limited in terms of the quantity and type of VR models that can be stored locally to the client machine. The VR applications executing on the server machines operate with a higher latency relative to the client machine, because of the latency associated with the network. On the other hand, because the server machines typically have significantly more storage capacity relative to the client machine, the server machines have access to many more VR models and more robust and sophisticated VR models than the client machine. Over time, the VR models located on the server machines are used to improve the local VR models stored on the client machine for each individual user. The server machines may analyze a speech of a user in order to identify the best data model to process the speech of that specific user. The server machine may inform the client machine of the best VR model, or modifications thereto, in order to process the speech of the user. Because the disclosed speech recognition system includes both local VR models and remote VR models, the speech recognition system is referred to herein as a hybrid speech recognition system. This hybrid speech recognition system is now described in greater detail.

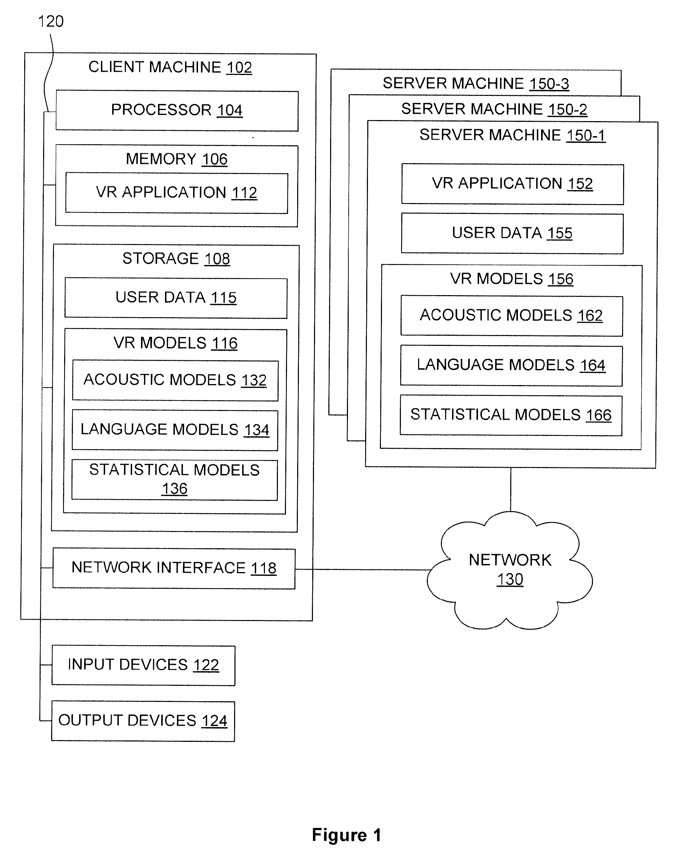

Figure 1 illustrates a speech recognition system 100 configured to implement one or more aspects of the various embodiments. As shown, the speech recognition system 100 includes, without limitation, a client machine 102 connected to one or more server machines 150-1, 150-2, and 150-3 via a network 130.

Client machine 102 includes, without limitation, a processor 102, memory 104, storage 108, a network interface 118, input devices 122, and output devices 124, all interconnected via a communications bus 120. In at least one embodiment, the client machine 102 may be in a vehicle, and may be configured to provide various services, including, without limitation, navigation, media content playback, hands-free calling, and Bluetooth® communications with other devices.

The processor 104 is generally under the control of an operating system (not shown). Examples of operating systems include the UNIX operating system, versions of the Microsoft Windows operating system, and distributions of the Linux operating system. (UNIX is a registered trademark of The Open Group in the United States and other countries. Microsoft and Windows are trademarks of Microsoft Corporation in the United States, other countries, or both. Linux is a registered trademark of Linus Torvalds in the United States, other countries, or both.) More generally, any operating system supporting the functions disclosed herein may be used. The processor 104 is included to be representative of, without limitation, a single CPU, multiple CPUs, and a single CPU having multiple processing cores.

As shown, the memory 106 contains the voice recognition (VR) application 112, which is an application generally configured to provide voice recognition that is tuned to each specific user. The storage 108 may be a persistent storage device. As shown, storage 108 includes the user data 115 and the VR models 116. The user data 115 includes unique speech profiles and other data related to each of a plurality of unique users that may interact with the VR application 112. The VR models 116 include a set of voice recognition models utilized by the VR application 112 to process user speech. Although the storage 108 is shown as a single unit, the storage 108 may be a combination of fixed and/or removable storage devices, such as fixed disc drives, solid state drives, SAN storage, NAS storage, removable memory cards or optical storage. The memory 106 and the storage 108 may be part of one virtual address space spanning multiple primary and secondary storage devices.

As shown, the VR models 116 include, without limitation, acoustic models 130, language models 132, and statistical models 134. Acoustic models 130 include the data utilized by the VR application 112 to convert sampled human speech, where phonemes represent perceptually distinct units of sound which are combined with other phonemes to form meaningful units. Language models 132 include the data utilized by the VR application 112 to convert groups of phonemes from the acoustic models 130 into the words of a particular human language. In some embodiments, the language models may be based on a probability function, where a particular set of phonemes may correspond to a number of different words, with varying probability. As one example, and without limitation, a particular set of phonemes could correspond to wear, where, or ware, with different relative probabilities. Statistical models 134 include the data utilized by the VR application 112 to convert groups of words from the language models 130 into phrases and sentences. The statistical models 134 consider various aspects of word groups, including, without limitation, word order rules of a particular language, grammatical rules of the language, and the probability that a particular word appears near an associated word. For example, and without limitation, if a consecutive set of received words processed via the acoustic models 130 and the language models 132 results in the phrase, "wear/where/ware the black pants," the VR application 112, via the statistical models 134, could determine that the intended phrase is, "wear the black pants." In some embodiments, the techniques described herein may modify the language models 132 and the statistical models 134 stored in the memory 108 while leaving the acoustic models 130.

The network interface device 118 may be any type of network communications device allowing the client machine 102 to communicate with other computers, such as server machines 150-1, 150-2, and 150-3, via the network 130. Input devices 122 may include any device for providing input to the computer 102. For example, a keyboard and/or a mouse may be used. In at least some embodiments, the input device 122 is a microphone configured to capture user speech. Output devices 124 may include any device for providing output to a user of the computer 102. For example, the output device 124 may include any conventional display screen or set of speakers. Although shown separately from the input devices 122, the output devices 124 and input devices 122 may be combined. For example, a display screen with an integrated touch-screen may be used.

Exemplary server machine 150-1 includes, includes, without limitation, an instance of the VR application 152 (or any application generally configured to provide the functionality described herein), user data 155, and VR models 156. As shown, the VR models 156 include, without limitation, language models 160, acoustic models 162, and statistical models 164. The user data 155 and VR models 156 on the server machine 150-1 typically include a greater number of user entries and VR models, respectively, than the user data 115 and the VR models 116 in the storage 108 of the client machine 102. In various embodiments, server machine 150-1 further includes, without limitation, a processor, memory, storage, a network interface, and one or more input devices and output devices, as described in conjunction with client machine 102.

Network 130 may be any telecommunications network or wide area network (WAN) suitable for facilitating communications between the client machine 102 and the server machines 150-1, 150-2, and 150-3. In a particular embodiment, the network 130 may be the Internet.

Generally, the VR application 112 provides speech recognition functionality by translating human speech into computer-usable formats, such as text or control signals. In addition, the VR application 112 provides accurate voice recognition for non-native speakers, speakers with strong accents, and greatly improve recognition rates for individual speakers. The VR application 112 utilizes the local instances of the user data 115 and the VR models 116 (in the storage 208) in combination with cloud-based versions of the user data 155 and VR models 156 on the server machines 150-1, 150-2, and 150-3. The client machine 102 converts spoken words to computer-readable formats, such as text. For example, a user may speak commands while in a vehicle. Client machine 102 in the vehicle captures the spoken commands through an in-vehicle microphone, a Bluetooth® headset, or other data connection, and compares the speech of a user to one or more VR models 116 in order to determine what the user said. Once the client machine 102 analyzes the spoken commands, a corresponding predefined function is performed in response, such as changing a radio station or turning on the climate control system.

However, memory limitations constrain the number of VR models 116 that client machine 102 system can store. Consequently, speech recognition on an individual level may be quite poor, especially for non-native speakers and users with strong accents or speech impediments. Embodiments disclosed herein leverage local and remote resources in order to improve the overall accuracy of voice recognition for individual users. When speech of a user is received by the client machine 102 in the vehicle (the local speech recognition system), the client machine 102 analyzes the speech of a user to correctly identify unique users (or speakers) by comparing the speech of a user to stored speech data. The client machine 102 identifies N regular users of the system, where N is limited by the amount of onboard memory 106 of the client machine 102. The client machine 102 then processes the speech of a user according to a VR model 116 selected for the user.

If the client machine 102 determines that an error has occurred in translating (or otherwise processing) the speech of a user, then the client machine 102 transmits the speech received from the user to a remote, cloud-based machine, such as server machine 150-1. The error may occur in any manner, such as when client machine 102 cannot recognize the speech, or when the client machine 102 recognizes the speech incorrectly, or when a user is forced to repeat a command, or when the user does not get an expected result from a command.

In one example, and without limitation, the client machine 102 could fail to correctly recognize speech when spoken by a user who speaks with a strong accent, as with a non-native speaker of a particular language. In another example, and without limitation, the client machine 102 could fail to correctly recognize speech when spoken by a user who speaks with certain speech impediments. In yet another example, and without limitation, the client machine 102 could fail to correctly recognize speech when a user, speaking in one language, speaks one or more words in a different language, such as when an English speaker utters a word or phrase in Spanish or German. In yet another example, and without limitation, the client machine 102 could fail to correctly recognize speech when a user is speaking in a language that is only partially supported in the currently loaded VR models 116. That is, a particular language could have a total vocabulary of 20,000 words, where only 15,000 words are currently stored in the loaded VR models 116. If a user speaks using one or more of the 5,000 words not current stored in the VR models 116, then the client machine 102 would fail to correctly recognize such words. If an error occurs during speech recognition under any of these examples, or if an error occurs for any other reason, then the client machine 102 transmits the speech received from the user, or a portion thereof, to a remote, cloud-based machine, such as server machine 150-1.

The server machine 150-1 analyzes the speech, or portion thereof, of a user in order to find a VR model 156 that is better suited to process the speech of a user. The server machine 150-1 transmits the VR model 156 to the client machine 102. Alternatively, server machine 150-1 transmits modification information regarding adjustments to perform on the VR model 116 stored in the client machine 102. In various embodiments, the modification information may include, without limitation, data to add to the VR model 116, data in the VR model 116 to modify or replace, and data to remove from the VR model 116. In response, the client machine 102 adds to, modifies, replaces, or removes corresponding data in the VR model 116. As a result, if the client machine 102 encounters the same speech pattern at a future time, the client machine 102 is able to resolve the speech pattern locally using the updated VR model 116 without the aid of the server machine 150-1.

Additionally, the server machine 150-1 returns the processed speech signal to the client machine 102. In some embodiments, the transmission of new VR models or VR model modifications from the server machine 150-1 to the client machine 102 may be asynchronous with the transmission of the processed speech signal. In other words, the server machine 150-1 may transmit new VR models or VR model modifications to the client machine 102 prior to, concurrently with, or subsequent to transmitting the processed speech signal for a particular transaction.

Wherever possible, the client machine 102, executing a local instance of the VR application 112, performs speech recognition via the local instances of the user data 115 and VR models 116 for reduced latency and improved performance relative to using remote instances of the user data 155 and VR models 156. In contrast, the remote instances of the user data 155 and VR models 156 on the server machine 150-1 generally provide improved mechanisms to support speech recognition relative to the local VR models 116 albeit at relatively higher latency. The client machine 102 receives user speech data (in audio format) from the user, such as a voice command spoken by a user in a vehicle. The client machine 102 then correctly identifies unique users based on an analysis of the received speech data against unique user speech profiles in the local user data 115. The client machine 102 then selects the unique speech profile of the user in the local user data 115, and processes the speech data using the selected model. If the client machine 102 determines that errors in translating the speech of a user have occurred using the selected model, the client machine 102 transmits the received user speech input, or a portion thereof, to the server machine 150-1 for further processing by the remote instance of the VR application 152 (or some other suitable application). Although each error is catalogued on the remote server machine 150-1, the local instance of the VR application 112 may variably send the user speech input to the server machine 150-1 based on heuristics and network connectivity.

The server machine 150-1, executing the remote instance of the VR application 152, identifies a remote VR model 156 on the server machine 150-1 that is better suited to process the speech of a user. The remote VR model 156 may be identified as being better suited to process the speech of a user in any feasible manner. For example, an upper threshold number of errors could be implemented, such that if the number of errors encountered by the client machine 102 exceeds the threshold, then the server machine 150-1 could transmit a complete remote VR model 156 to the client machine 102 to completely replace the local VR model 116. Additionally or alternatively, if the client machine 102 encounters a smaller number of errors below the threshold, then the server machine 150-1 could transmit modification data to the client machine 102 to apply to the local VR model 116. The server machine 150-1 transmits the identified VR model, or the modifications thereto, to the client machine 102. The client machine 102, then replaces or modifies the local VR model 116 accordingly. The client machine 102 then re-processes the user speech data using the new VR model 116 stored in the storage 108. In some embodiments, the number of recognition errors reduces over time, and the number of requests to the server machine 150-1, and corresponding updates to the VR models 116, may be less frequent.

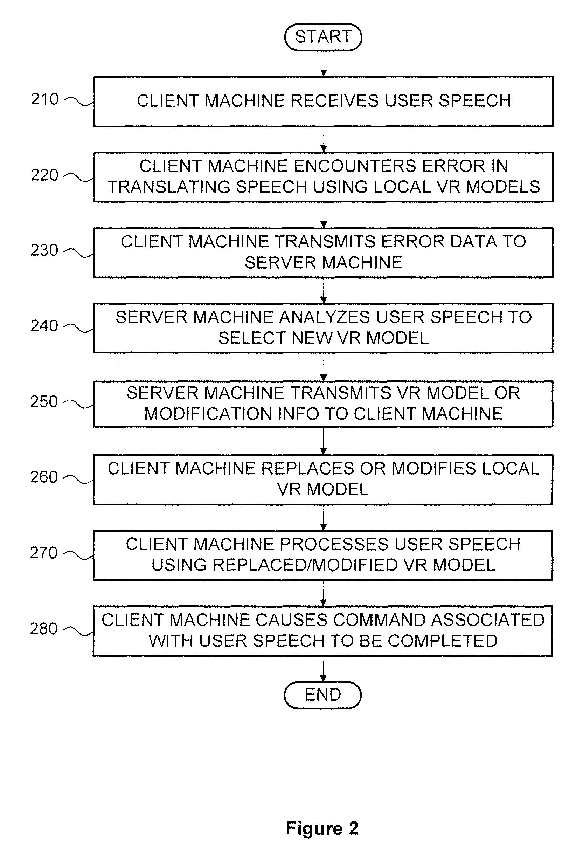

Figure 2 sets forth a flow diagram of method steps for performing user-adapted speech recognition, according to various embodiments. Although the method steps are described in conjunction with the systems of Figure 1, persons skilled in the art will understand that any system configured to perform the method steps, in any order, is within the scope of the present disclosure.

As shown, a method 200 begins at step 210, where the client machine 102 executing the VR application 112 receives a portion of user speech. The speech may be, include, without limitation, a command spoken in a vehicle, such as "tune the radio to 78.8 FM." The client machine 102 receives the speech through any feasible input source, such as a microphone or a Bluetooth data connection. At step 220, the client machine 102 encounters an error while translating the speech of a user using the local VR models 116 in the storage 108. The error may be any error, such as the client machine 102 incorrectly interpreting the speech of a user, the client machine 102 being unable to interpret the speech at all, or any other predefined event. At step 230, the client machine 102 transmits data representing the speech, or portion thereof, to the server machine 150-1. The data transmitted may include an indication of the error, the speech data, and the local VR model 116 with which the VR application 112 attempted to process the speech. In some embodiments, the VR application 112 may only transmit an indication of the error, which may include a description of the error, and not transmit the VR model 116 or the speech data.

At step 240, the server machine 150-1 executing the VR application 152 analyzes the received speech to select a new VR model 156 which is better suited to process the speech of a user. The server machine 150-1 identifies the new VR model 116 as being better suited to process the speech of a user in any feasible manner. At step 250, the server machine 150-1 transmits the selected VR model 156 to the client machine 102. In some embodiments, the VR application 112 may transmit modifications for the VR model 116 to the client machine 102 instead of transmitting the entire VR model 156 itself. At step 260, if the client machine 102 receives a new VR model 156 from the server machine 150-1, then the client machine replaces the existing VR model 116 with the newly received VR model 156. If the client machine 102 receives VR model modification information from the server machine 150-1, then the client machine 102 modifies the local VR model 116 in the storage 108 based on the received modification information. At step 270, the client machine 102 processes the speech of a user using the replaced or modified VR model 116. At step 280, the client machine 102 causes the desired command (or request) spoken by the user to be completed. The method 200 then terminates.

Thereafter, whenever the client machine 102 receives new speech input from the same user, the client machine 102 processes the speech of a user using the newly replaced or modified VR model 116 transmitted at step 250. The client machine 102 may also re-execute the steps of the method 200 in order to further refine the VR model 116 for unique users, such that over time, further modifications to the VR models 116 are not likely needed in order to correctly interpret speech of a user using the local VR model 116.

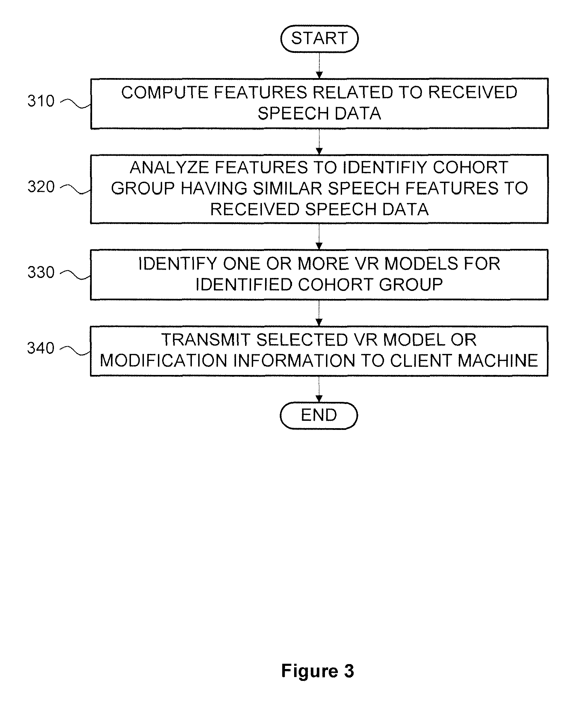

Figure 3 sets forth a flow diagram of method steps for analyzing speech data to select a new voice recognition model, according to various embodiments. Although the method steps are described in conjunction with the systems of Figures 1-2, persons skilled in the art will understand that any system configured to perform the method steps, in any order, is within the scope of the present disclosure.

As shown, a method 300 begins at step 310, where the server machine 150-1 executing the VR application 152 computes feature vectors for the speech data transmitted to the server machine 150-1 at step 230 of method 200. The computed feature vectors describe one or more features (or attributes) of each interval (or segment) of the speech data. At step 320, the server machine 150-1 analyzes the feature vectors of the speech to identify cohort groups having similar speech features. In at least one embodiment, the server machine 150-1 may perform a clustering analysis of stored speech data on the server machine 150-1 to identify a cohort group whose speech features most closely matches the received speech data. In this manner, the server machine 150-1 may identify what type of speaker the user is (such as non-native speaker, a person with a speech disability or impairment, or a native speaker having a regional dialect) and may allow the server machine 150-1 to identify a VR model better suited to process this class of speech. For example, the server machine 150-1 may determine that the received speech data clusters into a group of speech data associated with southern United States English speakers.

However, the storage 108 on the client machine 102 may not include a VR model in the VR models 116 that is suited to process speech for southern U.S. English speakers. Consequently, at step 330, the server machine 150-1 identifies one or more VR models for the cohort group identified at step 320. For example, and without limitation, the server machine 150-1 could identify one or more VR models stored in the VR models 156 stored on the server machine 150-1 that are associated with southern U.S. English speakers. Similarly, the server machine 150-1 could identify a VR model for people with a speech impediment, or a regional dialect. At step 340, the server machine 150-1 transmits to the client machine 102 the selected VR model (or updates to the local VR models) that are best suited to process the received speech. The method 300 then terminates.

In sum, a speech recognition system includes a local client machine and one or more remote server machines. The client machine receives a speech signal and converts the speech to text via locally stored VR models. If the client machine detects an error during local speech recognition, then the client machine transmits information regarding the error to one or more server machines. The server machine, which includes a larger number of VR models, as well as more robust VR models, resolves the error and transmits the processed speech signal back to the client machine. The server machine, based on received errors, also transmits new VR models or VR model modification information to the client machine. The client machine, in turn, replaces or modifies the locally stored VR models based on the information received from the server machine.

At least one advantage of the disclosed approach is that speech recognition can be performed for multilingual speakers or speakers with strong accents or speech impediments with lower latency and higher reliability relative to prior approaches. At least one additional advantage of the disclosed approach is that, over time, the ability of the client machine to correctly recognize speech of one or more users without relying on a server machine improves, resulting in additional latency reductions and performance improvements.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Embodiments of the disclosure may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present disclosure, a user may access applications (e.g., video processing and/or speech analysis applications) or related data available in the cloud.

While the preceding is directed to embodiments of the present disclosure, other and further embodiments of the disclosure may be devised without departing from the basic scope thereof, and the scope thereof is determined by the claims that follow.

## Claims

1. A method for performing speech recognition, the method comprising:
receiving an electronic signal that represents human speech of a speaker;
converting the electronic signal into a plurality of phonemes;
while converting the plurality of phonemes into a first group of words based on a first voice recognition model, encountering an error when attempting to convert one or more of the phonemes into words;
transmitting a message associated with the error to a server machine, wherein the server machine is configured to convert the one or more phonemes into a second group of words based on a second voice recognition model resident on the server machine; and
receiving the second group of words from the server machine.

2. The method of claim 1, further comprising:
receiving the second voice recognition model from the server machine; and
replacing the first voice recognition model with the second voice recognition model.

3. The method of claim 1 or 2, further comprising:
receiving modification information associated with the second voice recognition model from the server machine; and
modifying the first voice recognition model based on the modification information.

4. The method of one of claims 1 to 3, wherein the error is associated with a speech impediment that is unrecognizable via the first voice recognition model but is recognizable via the second voice recognition model.

5. The method of one of claims 1 to 3, wherein the error is associated with a word uttered in a language that is unrecognizable via the first voice recognition model but is recognizable via the second voice recognition model.

6. The method of one of claims 1 to 3, wherein the error is associated with a word uttered with an accent that is unrecognizable via the first voice recognition model but is recognizable via the second voice recognition model.

7. The method of one of claims 1 to 6, further comprising converting, via the server machine, the one or more phonemes into a second group of words based on a second voice recognition model resident on the server machine.

8. The method of one of claims 1 to 7, wherein the first voice recognition model includes a subset of the words included in the second voice recognition model, and the error is associated with a word that is included the second voice recognition model but not included in the first voice recognition model.

9. A computer-readable storage medium including instructions that, when executed by a processor, cause the processor to perform speech recognition, by performing the steps of one of claims 1 to 8.

10. A speech recognition system, comprising:
a memory that includes a voice recognition application; and
a processor coupled to the memory, wherein, when executed by the processor, the voice recognition program configures the processor to:
convert an electronic signal that represents human speech of a speaker into a plurality of phonemes;
while converting the plurality of phonemes into a first group of words based on a first voice recognition model, encounter an error when attempting to convert one or more of the phonemes into words; and
transmit a message associated with the error to a server machine, wherein the server machine is configured to convert the one or more phonemes into a second group of words based on a second voice recognition model resident on the server machine.

11. The speech recognition system of claim 10, wherein, when executed by the processor, the voice recognition application is further configured to:
receive the second voice recognition model from the server machine; and
replace the first voice recognition model with the second voice recognition model.

12. The speech recognition system of claim 10 or 11, wherein, when executed by the processor, the voice recognition application is further configured to:
receive modification information associated with the second voice recognition model from the server machine; and
modify the first voice recognition model based on the modification information.

13. The speech recognition system of one of claims 10 to 12, wherein each of the first voice recognition model and the second voice recognition model comprises at least one of an acoustic model, a language model, and a statistical model.

14. The speech recognition system of one of claims 10 to 13, wherein, when executed by the processor, the voice recognition application is further configured to combine the first group of words and the second group of words to form a third group of words.

15. The speech recognition system of one of claims 10 to 14, wherein, when executed by the processor, the voice recognition application is further configured to perform an operation based on the third group of words.
